# EUROPEAN PATENT SPECIFICATION

(11) **EP 3 757 044 B1**
(45) Date of publication and mention of the grant of the patent: **13.09.2023**
(21) Application number: 19290047.0
(22) Date of filing: 27.06.2019
(51) Int. Cl.: B65G 47/88, B65G 47/64

(54) **STOPPER, CONVEYOR, TROLLEY AND TRANSPORTATION SYSTEM**
STOPPER, FÖRDERER, WAGEN UND TRANSPORTSYSTEM
BUTOIR, CONVOYEUR, CHARIOT ET SYSTÈME DE TRANSPORT

(43) Date of publication of application: 30.12.2020
(73) Proprietor: Interroll Holding AG, 6592 Sant' Antonino (CH)
(72) Inventor: Loizeau, Antoine, 85110 Saint Germain de Princay (FR)
(74) Representative: Kohlhof, Stephan

(56) References cited:
- DE-U1- 9 404 684
- JP-A- S5 777 111
- JP-A- S53 116 676
- JP-A- S57 151 506
- JP-U- S6 241 704
- US-A1- 2018 312 207
- US-B1- 6 199 683

## Description

The invention relates to a stopper for a transportation system, a conveyor, a trolley, and a transportation system.

Conveyors comprising a plurality of rollers are commonly used for transporting loads. The rollers determine a track on which the loads, such as pallets, are transported towards a discharge end of the conveyor, where the loads are unloaded by, e.g., a forklift operator.

WO 2017/032456 A1 discloses a conveyor for conveying loads along a conveying direction. The conveyor comprises a frame and a plurality of rollers mounted in the frame.

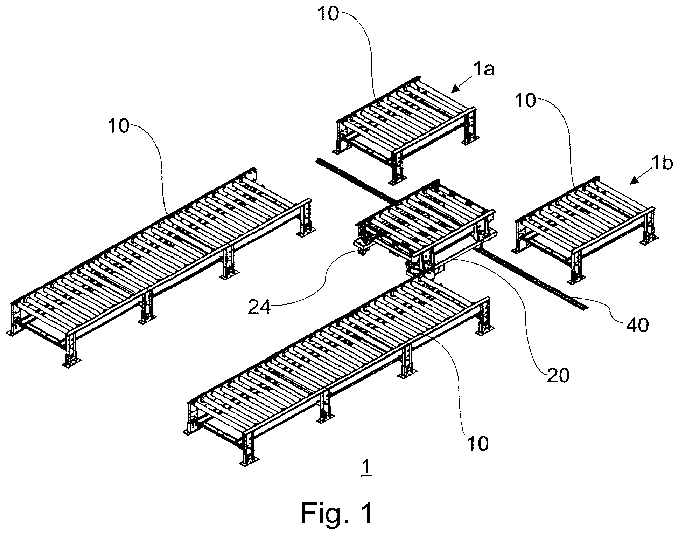

The applicant has further developed a transportation system as shown in Figs. 1 to 3. The transportation system 1 includes, e.g., at least two conveyor tracks 1a, 1b. Each conveyor track 1a, 1b includes a plurality of conveyors 10. Each conveyor 10 includes a plurality of rollers which are arranged in a conveyor frame.

The transportation system 1 also includes a trolley 20 which includes a plurality of rollers arranged in a trolley frame. The trolley 20 comprises at least one wheel 24 rotatable in a direction substantially perpendicular to a direction in which the conveyor tracks 1a and 1b convey loads. The trolley 20 is configured to be movable between the conveyor tracks 1a, 1b.

in particular, the trolley 20 is configured to fit between the two conveyors 10 of either the first conveyor track 1a or the second conveyor track 1b. The trolley 20 is adapted to move in a direction perpendicular to the conveying direction of the conveyor tracks

The invention relates to a stopper for a transportation system, a conveyor, a trolley, and a transportation system.

Conveyors comprising a plurality of rollers are commonly used for transporting loads. The rollers determine a track on which the loads, such as pallets, are transported towards a discharge end of the conveyor, where the loads are unloaded by, e.g., a forklift operator.

Document JP-S57 77111 discloses a stop mechanism for a cargo on a pallet activated by a handle causing a rotation of an eccentric cam that swings up a lifting plate. During the examination procedure the issuing authority considered that JP-S57 77111 discloses the features of the preamble of claim 1.

Document JP-S53 116676 relates to a device for gradually increasing the stroke of a moving mechanism by arranging a plurality of stopper mechanisms each including a stopper cam taking first to third rotary angular positions and cam for controlling the movement of the cam at interval to be integrally moved.

Document US 6,199,683 B1 relates to a lug loader including a first shaft rotatably mounted transversely across a board flow path, wherein a board in the board flow path is aligned transversely across the board flow path. A disc is rigidly mounted to the first shaft so as to rotate with rotation of the first shaft. The disc has a shoe mounting surface extending generally orthogonally from the first shaft. The disc also has a radially outer-most rim being generally circular and generally circumferentially contiguous so as to form a board supporting surface around the rim.

Document DE 94 04 684 U1 relates to a retaining element resting on a support roll of an activating mechanism. The barrel of the support roll rolls along a contour of the retaining element.

WO 2017/032456 A1 discloses a conveyor for conveying loads along a conveying direction. The conveyor comprises a frame and a plurality of rollers mounted in the frame.

The applicant has further developed a transportation system as shown in Figs. 1 to 3. The transportation system 1 includes, e.g., at least two conveyor tracks 1a, 1b. Each conveyor track 1a, 1b includes a plurality of conveyors 10. Each conveyor 10 includes a plurality of rollers which are arranged in a conveyor frame.

The transportation system 1 also includes a trolley 20 which includes a plurality of rollers arranged in a trolley frame. The trolley 20 comprises at least one wheel 24 rotatable in a direction substantially perpendicular to a direction in which the conveyor tracks 1a and 1b convey loads. The trolley 20 is configured to be movable between the conveyor tracks 1a, 1b.

In particular, the trolley 20 is configured to fit between the two conveyors 10 of either the first conveyor track 1a or the second conveyor track 1b. The trolley 20 is adapted to move in a direction perpendicular to the conveying direction of the conveyor tracks 1a and 1b and, thus, can be moved to a position between the two conveyors 10.

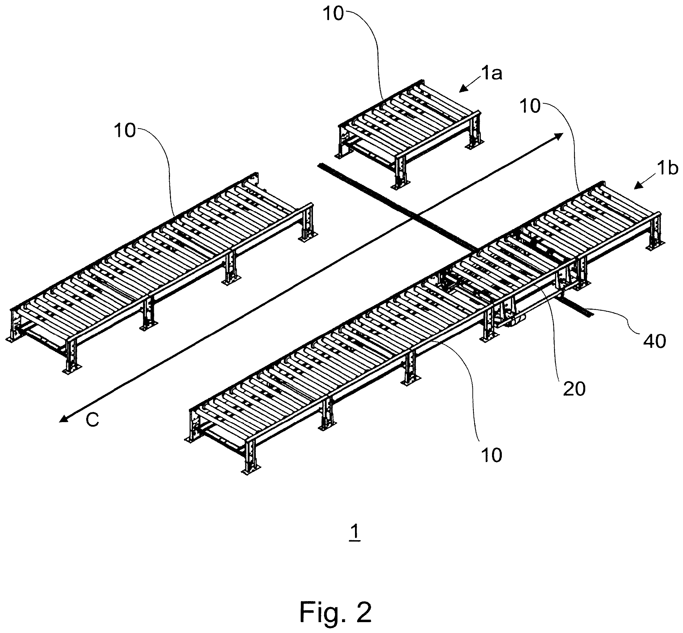

The first conveyor track 1a or the second conveyor track 1b is completed when the trolley 20 is arranged between the two conveyors 10 to fill the gap between the two conveyors 10. Thus, as shown in Fig. 2, when the trolley 20 is arranged between the two conveyors 10 of the second conveyor track 1b to fill the gap between the two conveyors 10 of the conveyor track 1b, the loads can be conveyed on the second conveyor track 1b. Similarly, when the trolley 20 is arranged between the two conveyors 10 of the first conveyor track 1a, it fills the gap between the two conveyors 10 of the first conveyor track 1a so that the loads can be conveyed on the first conveyor track 1a.

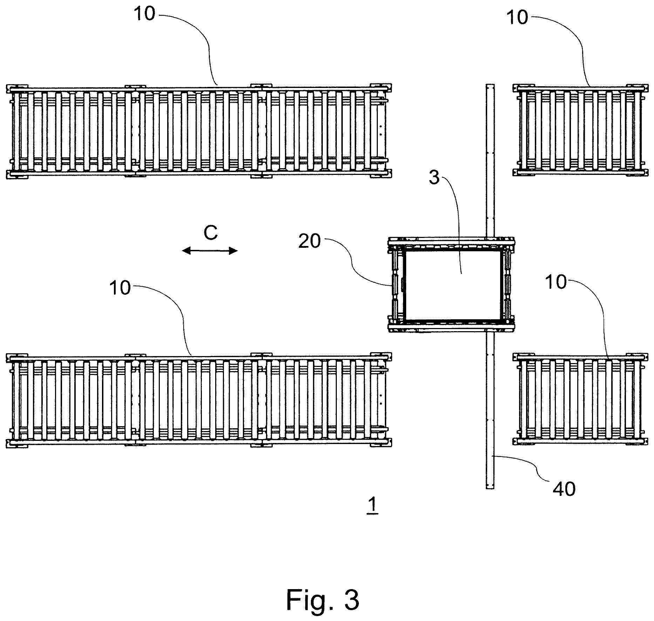

As shown in Fig. 3, a load 3 on the trolley may be moved together with the trolley 20 between the conveyor tracks 1a and 1b. Thus, the path to convey the load 3 can be changed between the two conveyor tracks 1a and 1b.

When the trolley moves away from at least one of the conveyor tracks and there is a gap in said conveyor track, loads may fall off a conveyor adjacent that gap. A load on the trolley may also fall off the trolley during the shift of the trolley from one conveyor track to the other conveyor track.

The problem relates to preventing a load from falling off a transportation system, in particular from falling off a conveyor and/or a trolley.

This problem is solved by the subject-matter of the independent claims. Preferred embodiments are subject of the dependent claims.

An aspect relates to a stopper for a transportation system configured to convey a load. A stopper comprises a stop element configured to contact with the load, wherein the stop element is pivotable about a stop axis. A cam is configured to support the stop element, wherein the cam is rotatable about a cam axis. A push rod is connected to the cam. The stop element rests on a first perimeter section of the cam when the push rod is arranged in the lock position. The stop element rests on a second perimeter section of the cam then the push rod is arranged in an unlock position. The first perimeter section ranges over a circular segment of the cam of at least 90°, and the second perimeter section also ranges over a circular segment of the cam of at least 90°.

The stopper may be arranged at an end section of a conveyor and/or a trolley. The stopper may comprise a plurality of elements, in particular the stop element, the cam, and the push rod. The stopper may be provided as an add-on for an already existing transportation system. The stopper is sufficiently robust to stop a load being conveyed along the transportation system. For example, the stopper for a pallet conveyor may be sufficiently robust to stop a pallet with a weight of up to one ton and/or two tons.

The stop element is the element of the stopper that is configured to contact with the load in a way that it stops the load from being conveyed along the transportation system when it is arranged in its stop position. In a conveying position, it may allow the load to pass the stopper. To switch between these two different states and/or positions, the stop element is pivotable about the stop axis. Depending on its pivot position, the stop element either impedes the load from being conveyed along the transportation system or it allows the load to be conveyed along the transportation system.

The stop element rests with at least one resting section upon the cam. The cam is rotatable about the cam axis and provides a support for the stop element, in particular for the resting section of the stop element. The cam may be provided as a disk, in particular as an eccentric disk. The cam is provided from a durable material, in particular from a metal and/or iron. The rotational movement of the cam may be limited so that is only rotatable within predetermined limits, e.g. between a first rotational position wherein its first perimeter section faces the stop element and a second rotational position wherein its second perimeter section faces the stop element. The rotational movement between said first rotational position and said second rotational position may correspond to a rotation between 5° and 180° about the cam axis, in particular between about 10° and about 120°, more particular between about 30° and about 90°.

Depending on the rotational position of the cam, the stop element rests upon a different perimeter section of the cam. Therein, a perimeter section may refer to an end section of the cam that is spaced apart from the cam axis and/or provided as a perimeter section of the eccentric disk. The cam may comprise an at least sectionally predetermined thickness that forms a basis and/or seating for the stop element at the perimeter.

The stop element may, e.g., either rest on the first perimeter section or on the second perimeter section of the cam. The cam may comprise further perimeter sections upon which the stop element may rest, e.g. a transitional perimeter section between the first and second perimeter sections. Preferably, the stop axis is substantially parallel to the cam axis. This enables an efficient arrangement of the stop element and the cam and their respective pivoting/rotating movement.

The rotational position of the cam is controlled by the position of the push rod. The push rod may be displaceable in a substantially linear direction, e.g. in a horizontal and/or vertical direction. The push rod is connected and/or coupled to the cam, so that upon a linear displacement of the push rod, the cam is rotated about its cam axis. Thus, the position of the push rod controls and/or defines whether or not the stop element rests upon the first perimeter section of the cam or on the second perimeter section of the cam.

Thus, the position of the push rod controls and/or defines the pivot position of the stop element and, thus, whether or not the stop element is active (in its stop position) or inactive (in its conveying position). Therein, the lock position of the push rod may correspond to the stop position of the stop element and the unlock position of the push rod may correspond to the conveying position of the stop element.

The stopper provides an efficient and/or durable means for stopping loads from being transported along the transportation system, in particular from falling off end sections of the transportation system.

According to an embodiment, the stop element is arranged in a stop position configured to stop the load from being conveyed along the transportation system when the stop element rests upon the first perimeter section of the cam. The stop element is arranged in a conveying position configured to allow the load to be conveyed along the transportation system when the stop element rests upon the second perimeter section of the cam. While the stop elements may impede and contact with the load in the stop position, the stop elements may be arranged in a withdrawn position in the conveying position, wherein it is spaced apart from the load.

According to a further development of this embodiment, the stop element comprises a protrusion. The protrusion is configured to protrude above a conveying plane on which the load is conveyed along the transportation system in the stop position and, thus, may prohibit loads from passing the position of the stop element. The protrusion is configured to be arranged at least 5 mm below the conveying plane in the conveying position. The conveying plane may be defined by the upper ends of the roller barrels of the transportation system and/or the lower ends of the loads being conveyed along the transportation system. The distance of at least 5 mm below the conveying plane and the conveying position enables a safe transportation of the loads along the transportation system in the conveying position. In a transportation system for pallets that transport goods along the transportation system, these pallets may comprise a rough bottom surface that might get stuck at the protrusion if it is not at least 5 mm spaced apart from the conveying plane.

According to an embodiment, the first perimeter section is arranged at a different distance from the cam axis than the second perimeter section. For example, the first perimeter section may be arranged at a larger distance from the cam axis than the second perimeter section. Thus, the stop element will be arranged at a different pivot position depending on whether it rests upon the first perimeter section of the cam or upon the second perimeter section of the cam. In this embodiment, the cam is eccentric.

According to an embodiment, the stop element comprises a roller bearing at a position that rests upon the cam. The roller bearing may enable an easy transition from resting upon the first perimeter section to the second perimeter section. The bearing also may reduce friction and/or attrition.

According to an embodiment, a protrusion of the stop element that is configured to contact with the load is spaced at least 2 cm, preferably at least 4 cm, apart in a horizontal direction from the stop axis and/or the closest roller axis of the transportation system. Indeed, it is advantageous when the protrusion is not arranged right above the stop axis but rather arranged beside the stop axis (when view from above) so that its pivot position may be better controlled and/or set. This may improve the design/arrangement options of the resting position of the stop element on the cam. It may also decrease the strain on the stop element in the stop position.

According to an embodiment, the stop element is arranged at most 2 cm away from an end section of the transportation system. The end section may, e.g., be the end of a trolley or a conveyor. It is advantageous that the stop element is arranged as close to the end section of the conveyor as possible to ensure that any load on the transportation system is stopped by the stop element as soon as required.

According to an embodiment, the stop axis coincides with the rotational axis of an end roller of the transportation system. Therein, the stop element is pivotable about the axis of rotation of the end roller of the transportation system. The end roller is the roller for supporting the load of the transportation system that is arranged next to and/or at an end section of the transportation system. For this, the end roller may comprise a reduced length so that the stop element may be arranged on its axle and/or axle stump besides the roller and within a frame of the transportation system. This enables a compact design. In an embodiment, the end roller (e.g. with a reduced length of its roller barrel) may be part of the stopper.

According to an embodiment, the stop element comprises a roll over protection. The roller over protection is configured to prevent the stop element from pivoting out of its regular, predetermined pivoting range, e.g. when a load hits the stop element against the intended conveying direction. The roll over protection may be provided by a nose and/or an elongate member protruding from the stop element that cooperates with a roll over stop so that it limits the pivoting and/or operational range of the stop element.

According to an embodiment, the push rod is pushed into the lock position by a spring force. This embodiment, the stopper may also comprise an according spring and/or elastic member and/or biasing member providing said spring force. When the push rod is pushed into its unlock position, this movement of the push rod is accomplished against the spring force and, thus, may compress the spring. As soon as the push rod is released, it is moved into its lock position by the spring force relaxing the spring. This ensures that the stopper is preventing loads from being conveyed past the stopper whenever the push rod is not actively pushed into its unlock position.

According to an embodiment, the push rod is displaceable in a substantially horizontal and/or vertical direction. On a regular basis, the push rod will either be displaceable in a substantially horizontal direction or a vertical direction. However, in some special cases, the push rod may comprise more than one element, in particular a first push rod displaceable in a substantially horizontal direction and a second push rod displaceable in a substantially vertical direction. Generally, the push rod(s) may be displaceable in one or two substantially linear direction(s). When the push rod is displaceable in a substantially horizontal direction, this horizontal direction may be substantially parallel to the conveying direction along which loads are conveyed along the transportation system.

An aspect relates to a conveyor for conveying a load comprising a stopper according to the previously described aspect. Therein, the stopper may be arranged at an end section of the conveyor. The conveyor may comprise a frame in which a plurality of rollers are arranged for conveying the load. At one or both ends of the conveyor in conveying direction, at least one stopper according to the previous aspect may be arranged. The conveyor may be provided as a pallet conveyor for conveying pallets, in particular for conveying standardized pallets like EU- and/or US-pallets.

An aspect relates to a trolley for conveying a load, the trolley comprising a wheel rotatable in a direction different from a conveying direction of the load and a stopper according to the previously described aspect. The trolley may comprise two stoppers, in particular one stopper at each end in conveying direction.

An aspect relates to a transportation system comprising a conveyor according to the aspect described above and a trolley according to the aspect described above. The trolley may be configured to be arranged at an end of the conveyor so that a load may be safely transported from the conveyor to the trolley and/or vice versa.

According to an embodiment, the trolley of the transportation system comprises a ramp configured to contact with a push rod of the stopper of the conveyor. Therein, the ramp of the trolley is configured to displace the push rod from the lock position into the unlock position when a trolley is arranged as extension of that conveyor. Whenever the trolley is moved away from the conveyor, the ramp releases the push rod of the stopper of the conveyor so that it is moved into its lock position, e.g. by a biasing member and/or spring force described above.

According to an embodiment, the transportation system comprises a bump configured to interact with the push rod of the stopper of the trolley and/or the conveyor. The bump is configured to operate the push rod of the stopper of the trolley and/or the conveyor. Therein, the transportation system may comprise a plurality of bumps for operating the different stoppers of the transportation system. The bump may, e.g., be arranged on the floor and/or a frame of the transportation system. The bump may, e.g., interact with a vertically arranged push rod.

Herein, the terms upper, lower, below, above, etc. refer to the reference system of the Earth in a mounting position of the subject-matter.

The numbers and/or angles given in the claims and the description are not limited to the exact numbers and/or angles, but may include measurement inaccuracies within limits that still enable solving the underlying problem.

The invention is further illustrated in reference to embodiments shown in the figures.

Embodiments of the invention are described with reference to the figures.

The embodiments as shown by:
- Fig. 1: a perspective view of a transportation system including a trolley movable between two conveyor tracks;
- Fig. 2: a perspective view of the transportation system, wherein the trolley is aligned with one of the conveyor tracks;
- Fig. 3: a top view of the transportation system wherein a load is moving together with the trolley;
- Fig. 4: a view from above on a transportation system comprising stoppers provided on the conveyor and the trolley;
- Fig. 5A: a front view of a conveyor with a stopper;
- Fig. 5B: the B-B sectional view of Fig. 5A;
- Fig. 6: a perspective view of a roller with stop elements of a stopper;
- Fig. 7: a sectional view of a stopper stopping a load on a conveyor;
- Fig. 8: a sectional view of the stopper allowing the load to pass the stopper;
- Fig. 9: a sectional view of the stopper allowing the load to further pass the stopper;
- Fig. 10: a perspective view of a stop element comprising a bearing;
- Fig. 11A: a perspective view of a cam;
- Fig. 11B: a side view of the cam; and
- Fig. 12: a top view of a transportation system, wherein a trolley is moving between conveyors.

**Fig. 1** shows a perspective view of a transportation system 1 which may comprise one or more stoppers according to the present invention. The transportation system 1 comprises one or more conveyor tracks, in the shown embodiment the first conveyor track 1a and the second conveyor track 1b. Each conveyor track 1a, 1b comprises one or more conveyors 10, in particular two conveyors 10 spaced apart from each other by a gap. Each conveyor 10 comprises a plurality of rollers which are arranged in a conveyor frame.

The transportation system 1 further comprises a trolley 20 comprising a plurality of rollers arranged in a trolley frame. The trolley 20 comprises a wheel 24 rotatable in a direction different from a conveying direction of a load along at least one of the conveyors 10. Particularly, the wheel 24 is rotatable in a direction substantially perpendicular to a conveying direction in which the conveyor tracks 1a, 1b convey loads. The trolley 20 is configured to be movable between the conveyor tracks 1a, 1b particularly along a rail 40 fixed on a floor.

The trolley 20 may be configured to fit in each gap between the two conveyors 10 of the first conveyor track 1a and the second conveyor track 1b. The trolley 20 is adapted to move in a direction substantially perpendicular to the conveying direction of the conveyor tracks 1a, 1b and may be moved between the two gaps in the two conveyor tracks 1a and 1b.

The first conveyor track 1a and/or the second conveyor track 1b is completed when the trolley 20 is arranged between the corresponding two conveyors 10 to fill the gap between its two conveyors 10.

**Fig. 2** shows perspective view of the transportation system 1 wherein the trolley 20 is arranged between the two conveyors 10 of the second conveyor track 1b so that it fills the gap between the two conveyors 10 of the second conveyor track 1b. In this configuration, loads may be conveyed along the second conveyor track 1b in conveying direction C. Similarly, when the trolley 20 fills the gap between the two conveyors 10 of the first conveyor track 1a, loads may be conveyed along the conveyor track 1a in conveying direction C.

**Fig. 3** shows a load 3 on the trolley 20 being moved together with the trolley 20 between the conveyor tracks 1a and 1b. Thus, the trolley 20 may carry the load 3 to switch the conveyor track 1a, 1b along which the load 3 is conveyed.

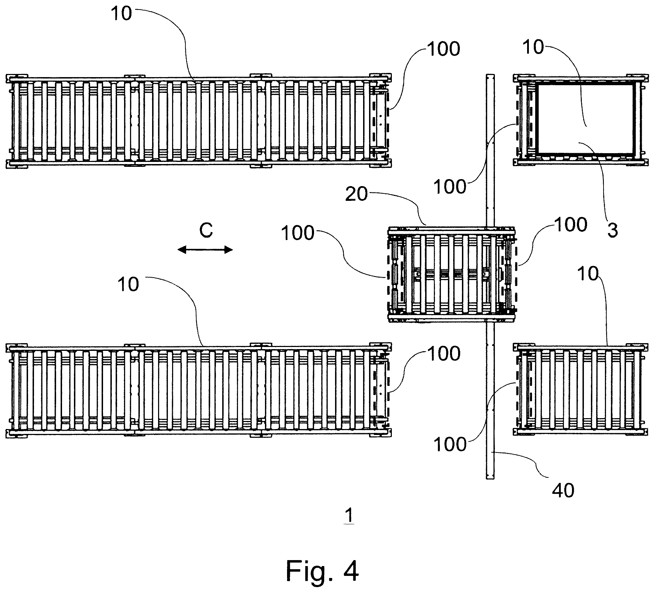

**Fig. 4** shows a top view of the transporting system 1 comprising at least one stopper 100. Particularly, one stopper 100 is provided at one of the ends of each conveyor 10 in the conveying direction C. Stoppers 100 may be provided at both ends of each conveyor 10 in the conveying direction C. In the shown embodiment, at least one stopper 100 is arranged at each end of each conveyor 10 bordering the gap for the trolley 20 in the respective conveyor track 1a, 1b.

At least one stopper 100 may also be provided at one or both end(s) of the trolley 20 in the conveying direction C.

The stoppers 100 at the gaps are configured to prevent loads 3 from passing the stopper 100 when the gap is not filled by the trolley 20. The stoppers 100 at the trolley 20 are configured to prevent loads 3 from falling off the trolley 20 when it is not arranged next to any conveyor 10 that may receive the load 3 from the trolley 20.

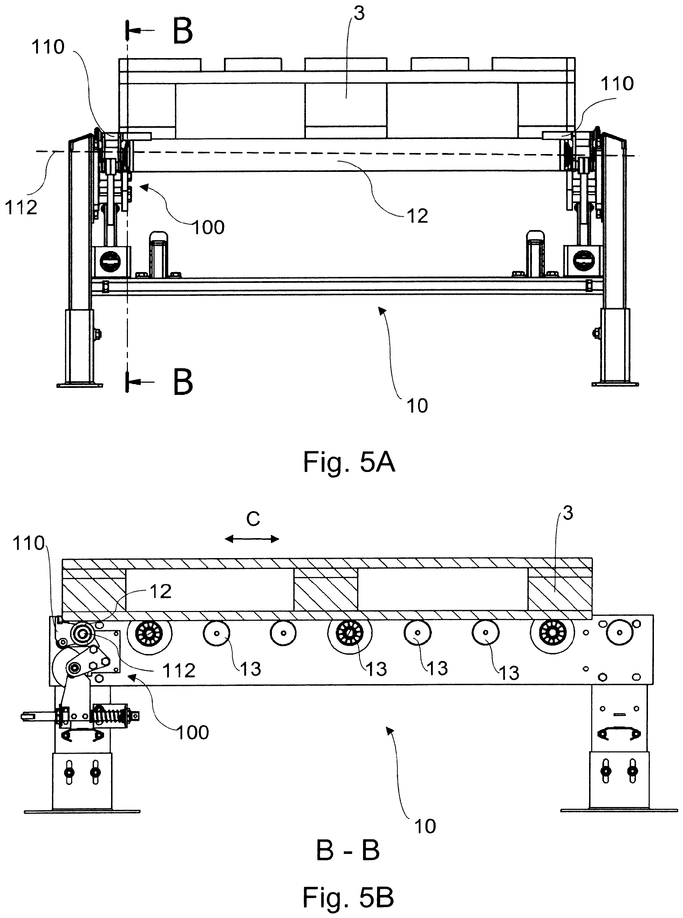

**Figs. 5A and 5B** show a front view and a sectional view, respectively, of a conveyor 10 with a plurality of rollers 13, and end roller 12 and a stopper 100. The rollers 13 and the end roller 12 are arranged substantially parallel to each other and substantially perpendicular to the conveying direction C within a conveyor frame. The end roller 12 is arranged at an end section of the conveyor 10, e.g. at an end section adjacent a gap for the trolley 20 (cf. Fig. 1). The end roller 12 is designed similar to the other rollers 13 of the conveyor 10, but it may comprise a slightly shorter roller barrel than the other rollers 13. However, its roller axle may be as long as the roller axles of the other rollers 13. The roller axle(s) may be provided by two axle stumps or by a continuous axle(s). The diameter of the end roller 12 may correspond to the diameters of the other rollers 13.

The stopper 100 comprises at least one stop element 110 configured to contact with the load 3 so that it prevents the load from passing the stopper 100. The stopper 100 may comprise two stop elements 110 arranged at opposite, lateral ends of the end roller 12 of the conveyor 10. Therein, the end roller 12 may be an element of the stopper 100 and/or of the conveyor 10.

The load 3 may be provided as a pallet, e.g. a pallet supporting goods. In other words, the transportation system 1 may be provided as a pallet transportation system.

The stop element 110 is arranged at an end section of the conveyor 10 (or the trolley 20), e.g. at a lateral end of the end roller 12 in the width direction orthogonal to the conveying direction C. The stop element 110 is supported by the frame of the conveyor 10. The stop element 110 is capable of pivoting around a stop axis 112. The stop axis 112 may be identical to the rotational axis of the end roller 12 arranged at the end of the conveyor 10.

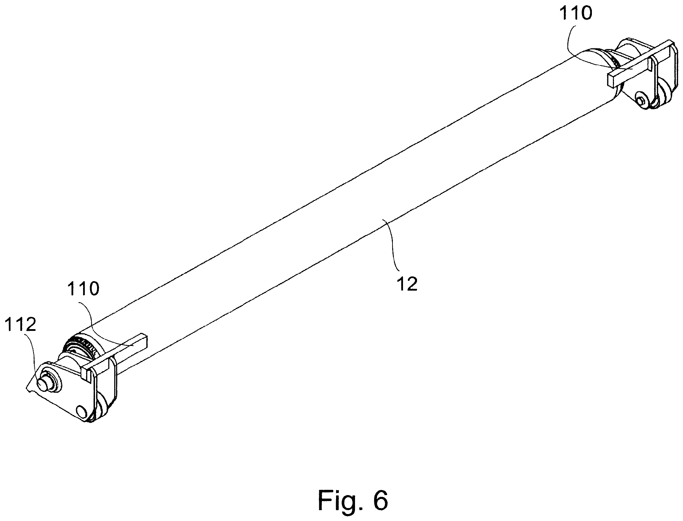

**Fig. 6** shows the end roller 12 of the conveyor 10. The end roller 12 may be arranged at an end of the conveyor 10 in the conveying direction C (see Fig. 2). The end roller 12 may also be arranged at the trolley 20, e.g. at an end of the trolley 20 in conveying direction C. The end roller 12 comprises a roller barrel in the form of a cylinder barrel configured to convey a load 3 along the conveyor 10 and/or the trolley 20. The roller barrel is configured to rotate about a roller axle. The roller axle may be provided by axle stumps mounted into the conveyor frame or the roller axle may be provided as a continuous axle arranged throughout the full length of the roller 12.

The end roller 12 comprises at least one lateral end the stop element 110. In the shown embodiment, the end roller 12 comprises two stop elements 110 at the two lateral ends of the end roller 12. The stop elements 110 are pivotable about the stop axis 112. The stop axis 112 coincides with the roller axle about which the roller 12 is rotatable.

The two stop elements 110 of the end roller 12 may be coupled to each other so that they pivot about stop axis 112 together. This coupling may be provided within the roller barrel of the end roller 12 and/or by an external coupling. For example, the protrusions of the stop elements 110 that are configured to contact with the load 3 may be longer than shown in Fig. 6 and connected to each other. Thus, the two stop elements 110 may pivot synchronously.

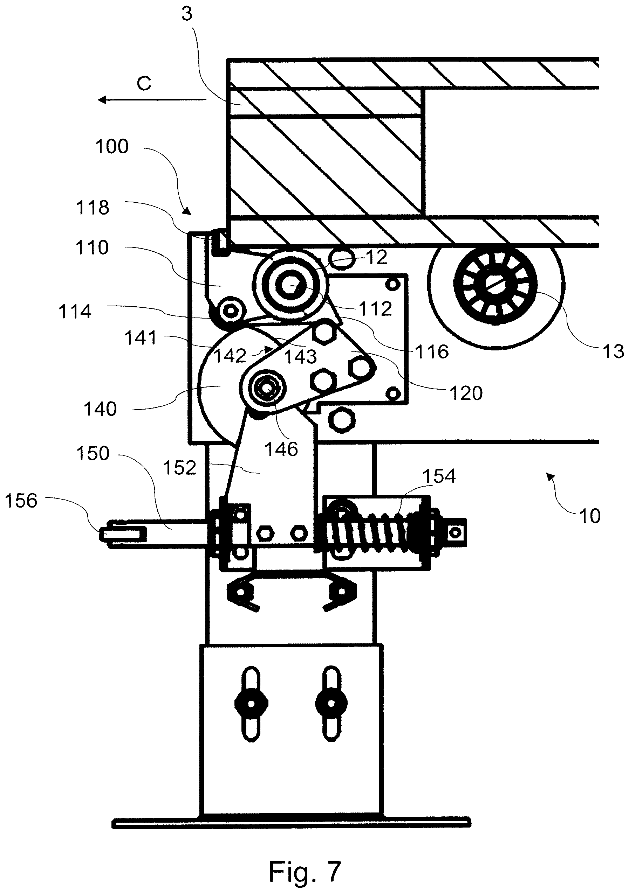

**Fig. 7** shows a sectional view of a stopper 100 stopping a load 3 on the conveyor 10. The stopper 100 is configured to stop the load 3 from passing the stopper 100 in conveying direction C, i.e. over the end of the conveyor 10. The stopper 100 is further configured to allow the load 3 from passing the stopper 100 in conveying direction C when the stopper is in a conveying position.

The stopper 100 comprises a plurality of elements. For example, the stopper 100 comprises the stop element 110, the cam 140 and the push rod 150. The stopper 100 may also comprise the fixed element 120. Alternatively, the fixed element 120 may be provided as an element of the frame of the conveyor 10. The stopper 100 may also comprise the end roller 12 (cf. Fig. 6), in particular together with a second stop element 110, a second cam 140, and a second push rod 150 arranged at the opposite end of the end roller 12.

In the shown embodiment, the stop element 110 is arranged above the cam 140. The cam 140 is arranged above the push rod 150. Furthermore, the cam 140 and the fixed element 120 are roughly arranged at the same height from the floor.

The stop element 110 is pivotable about the stop axis 112. The stop axis 112 coincides with the rotational axis of one of the rollers of the conveyor 10. In particular, the stop axis 112 coincides with the axis or rotation of the end roller 12 of the conveyor 10 which is arranged next to an end section of the conveyor 10.

The stop element 110 further comprises a bearing 114, a roll over protection 116, and a protrusion 118.

The protrusion 118 is configured to contact with the load 3. The protrusion 118 is arranged so that it protrudes above a conveying plane on which the loads 3 are conveyed along the conveyor 10. Thus, the protrusion 118 may prohibit the load 3 from passing the stopper 100 when the protrusion 118 is arranged in its stop position wherein it protrudes above the conveying plane (as shown in Fig. 7). In the situation shown in Fig. 7, the load 3 contacts with the protrusion 118 and is stopped from being further conveyed along the indicated conveying direction C. Thus, the stopper 100 prevents the load 3 from falling off the conveyor 10, in particular in situations wherein the trolley 20 is not arranged at the free end of the conveyor 10.

The stopper 100 may not only be arranged at an end of the conveyor 10 facing a gap that may occasionally be filled by the trolley 20, but the stopper 100 (or another one) may also be arranged at another free end of the conveyor 10. For example, the stopper 100 may be arranged at a load and/or unload end of a conveyor 10, where loads 3 such as pallets may be unloaded from and/or loaded to the conveyor 10, e.g. by a fork lift.

In the stop position shown in Fig. 7, the stop element 110 is prevented from pivoting downwards (in the sectional view shown in Fig. 7 anticlockwise) because its bearing 114 rests upon and is supported by the cam 140. The bearing 114 is arranged at a lower section of the stop element 110. The bearing 114 interacts with a perimeter section of the cam 140 that prevents the stop element 110 from pivoting downwards so that its protrusion 118 would be arranged below the conveying plane of the conveyor 10.

In the stop position shown in Fig. 7, the bearing 114 rests upon a first perimeter section 141 of the cam 140. The cam 140 is rotatable about a cam axis 146 and comprises at least two different perimeter sections: The first perimeter section 141 and a second perimeter section 142. The two perimeter sections 141 and 142 are provided such that they are arranged at different distances from the cam axis 146. In the shown embodiment, the first perimeter section 141 is arranged at a larger distance from the cam axis 146 than the second perimeter section 142. Thus, as long as the bearing 114 of the stop element 110 rests upon the (larger) first perimeter section 141, the protrusion 118 is pushed and/or upheld in a position wherein it prevents load 3 from passing the stopper 100, i.e. in the stop position of the stop element 110.

The stop element 110 further comprises the roll over protection 116. A roll over protection 116 may be provided as another protrusion and/or nose of the pivotable stop element 110. The roll over protection 116 interacts with the fixed element 120. The roll over protection 116 prevents the stop element from being pivoted by a load 3 going against the conveying direction C indicated in Fig. 7 so that the stop element 110 would flip over (clockwise) and would become inactive. In other words, the roll over protection 116 is configured to prevent the stop element 110 from being pivoted too far out of its regular operational position and/or range. Indeed, the roll over protection 116 may be configured to prevent that the bearing 114 is lifted too much from the perimeter sections 141, 142 of the cam 140.

Furthermore, in the stop position, the rollover protection 116 causes the stopper 100 to stop loads 3 from passing the stopper 100 in both conveying directions C. Thus, loads 3 may neither fall of the conveyor 10, nor may the loads 3 be loaded onto the conveyor 10 from the end at which the stopper 100 is arranged. The protrusion 118 is also stopping loads 3 from passing the stopper 100 in the opposite conveying direction C (i.e. against the conveying direction C indicated in Fig. 7), wherein the rollover protection 116 prevents the stop element 110 from flipping over clockwise about the stop axis 112.

The rotational axis of the cam 140, i.e. the cam axis 146, is supported and/or held in a fixed relation to the frame of the conveyor 10. In the shown embodiment, the cam axis 146 is held by the fixed element 120. Alternatively, the cam axis 146 may be held by another fixed element and/or may be mounted to the frame of the conveyor 10.

The rotational position of the cam 140 is controlled by the push rod 150. The push rod 150 is displaceable in a substantially linear direction. In the shown embodiment, the push rod 150 is displaceable in a linear direction substantially parallel to the conveying direction C. More generally, the push rod 150 may be displaceable in a substantially horizontal direction. In alternative embodiments, the push rod 150 may be displaceable in a vertical direction.

At a first end, the push rod 150 may comprise a roller 156. The roller 156 may be arranged at a free end of the push rod 150 protruding out of the frame of the conveyor 10. This free end of the push rod 150 is configured to interact with a trigger, e.g. with a ramp and/or bump of the trolley 20. The roller 156 at the free end of the push rod 150 is merely optional and may reduce friction whenever the push rod 150 is activated and/or triggered.

The push rod 150 is configured to be pushed towards the conveyor 10 from its free end at the roller 156 against the conveying direction C indicated in Fig. 7 and against the force of a spring 154. In the situation shown in Fig. 7, the push rod 150 is configured to be pushed to the right.

As shown in Fig. 7, the push rod 150 is arranged in its lock position wherein the spring 154 is rather relaxed. The spring 154 is configured to press push rod 150 into its lock position whenever there is no pressure applied to the free and of the push rod 150 with the roller 156. Without such a trigger, the spring 154 moves the free end of the push rod 150 in conveying direction C so that it may protrude out of the conveyor 10 and so that the push rod 150 is arranged in the lock position.

The push rod 150 further comprises a connecting rod 152. The connecting rod 152 connects the push rod 150 to the cam 140. The connecting rod 152 is fixed at a first end, the shown embodiment at a lower end, to the push rod 150. At its opposite free end, in the shown embodiment at its upper end, the connecting rod 152 is fixed to the cam 140. Thus, the position of the pushing rod 150 controls the rotational position of the cam 140, because they are both connected to each other by the connecting rod 152.

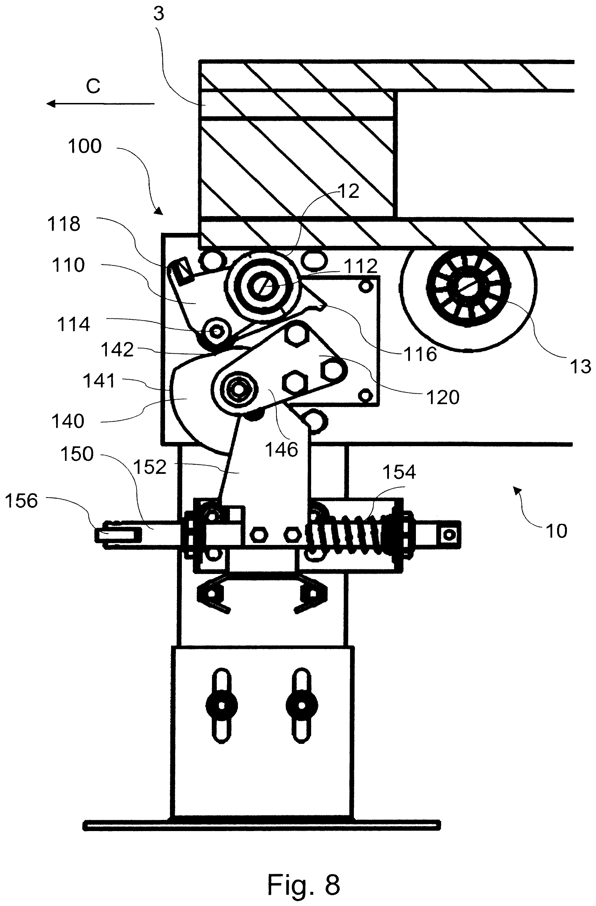

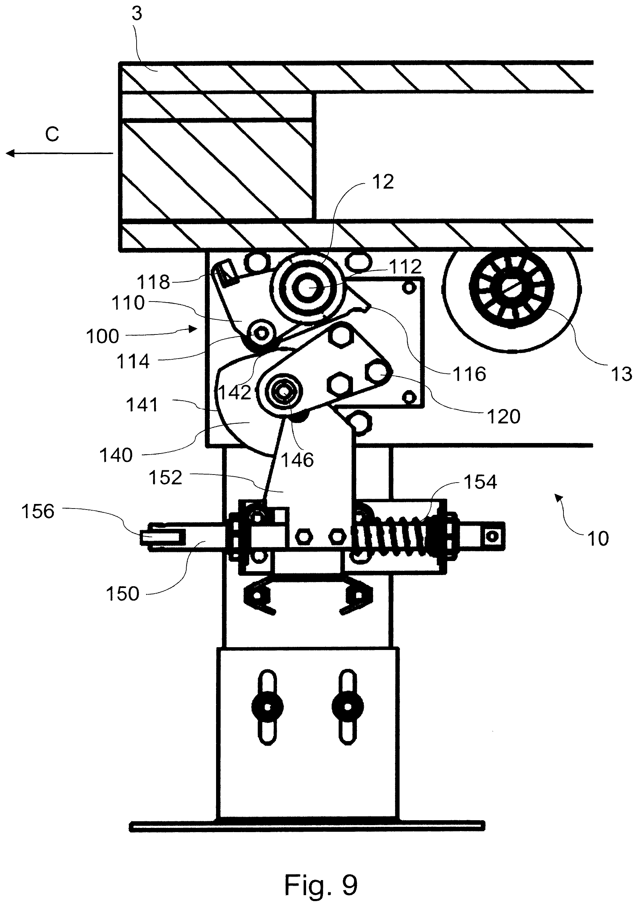

The rotational position of the cam 140 controls and/or defines the pivot position of the stop element 110. Thus, end the end, the position of the push rod 150 controls and/or defines whether the stopper 100 is stopping the load 3 in its stop position (as shown in Fig. 7), or whether it is arranged in a conveying position (as shown in Figs. 8 and 9) wherein the loads 3 may pass the stopper 100.

**Fig. 8** shows the same situation as Fig. 7 with the difference that the push rod 150 is pushed against the conveying direction C indicated in Fig. 8 in its unlocked position. Together with the push rod 150, also the connecting rod 152 is displaced towards the conveyor 10. Because the upper end of the connecting 152 is connected to the cam 140, the cam 140 is also arranged in a different rotational position. In the situation shown in Fig. 8, it is rotated anticlockwise out of the situation shown in Fig. 7. A comparison of the situations of Fig. 7 and Fig. 8 shows that the cam 140 follows the movement of the push rod 150 and the connecting rod 152.

In the unlock position of the push rod 150, the cam 140 is rotated so that not its first perimeter section 141 faces the stop element 110, but rather its second perimeter section 142. Thus, the bearing 114 rests upon the second perimeter section 142.

As shown in Fig. 8, the stop element 110 is pivoted anticlockwise downwards so that its protrusion 118 is arranged below the conveying surface of the conveyor 10. This pivoting movement of the stop element 110 may be caused by gravitation. The gravitational force of the stop element 110 caused the pivoting movement about the stop axis 112. This pivoting movement was caused because a first end of the stop element 110 comprising the protrusion 118 at its upper side and the bearing 114 at its lower side is longer (and thus heavier) than the opposing second end of the stop element 110, here the one with the roll over protection 116.

In the situation shown in Fig. 8, the push rod 150 is pushed into the conveyor 10 and into its unlock position. The cam 140 is rotated so that its second perimeter section 142 points upwards and the stop element 110 is pivoted in its conveying position. In its conveying position, the stop element 110 and, thus, the stopper 100 allow the load 3 to be conveyed along the conveying directions C.

**Fig. 9** shows how the load 3 passes the stopper 100 because the stop element 110 is still arranged in its conveying position below the conveying plane. The conveying plane corresponds to the plane of the lower edge of the load 3 and/or the plane of the upper ends of the rollers 12, 13 of the conveyor 10.

Usually, the push rod 150 is only pushed into its unlock position when either the trolley 20 is arranged at the end of the conveyor 10 to receive the load 3 and/or the load 3 may be picked up by, e.g., a fork lift.

As soon as the push rod 150 is not any more pushed in, e.g. because the trolley 20 moved away from the conveyor 10, the spring 154 pushes the push rod 150 into its lock position (see Fig. 7). The spring force then also causes the cam 140 to rotate back about the cam axis 146 into the rotational position shown in Fig. 7 wherein the first perimeter section 141 faces the stop element 110. This also causes the stop element 110 to pivot back upwards while the bearing 114 rolls from the second perimeter section 142 to the first perimeter section 141 on the cam 140. Thus, the stop element 110 is pushed back into its stop position as shown in Fig. 7. The spring 154 is chosen strong enough to lift the stop element 110 in its stop position and to compensate for all the different contributions of friction.

As shown in Fig. 7, the spring 154 does not have to be strong enough to hold back the load 3, because the movement of the load 3 does not strain the spring 154. Indeed, the movement of the load 3 along conveying direction C is stopped by protrusion 118 which is held by the first perimeter section 141 so that it does not strain the spring 154.

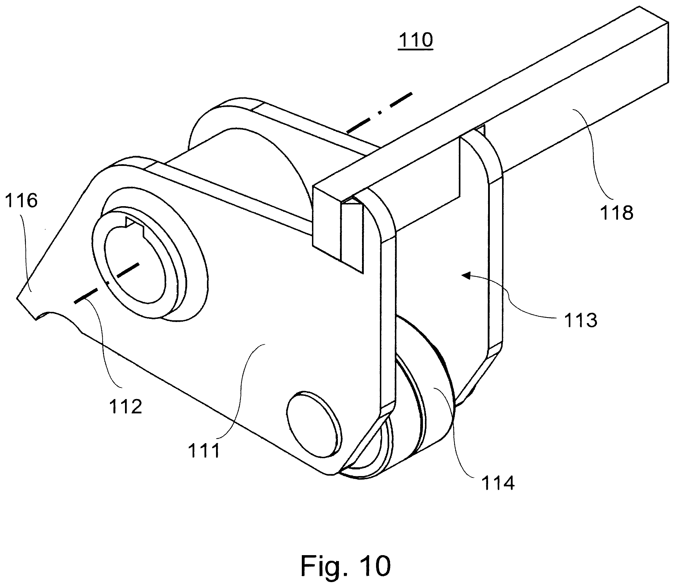

**Fig. 10** shows a perspective view of the stop element 110. The stop element 110 comprises a main body 111 that is configured to be pivotable about the stop axis 112 indicated by a dashed line. The body 111 of the stop element 110 may comprise an opening 113 in which the bearing 114 is arranged. In the shown embodiment, the bearing 114 is provided as a roller bearing. Alternatively, the stop element 110 may be provided without any bearing or a different kind of bearing. The bearing 114 may greatly reduce friction and/or abrasion.

At an upper section of the main body 111 facing away from the stop axis 112, the protrusion 118 is arranged. The protrusion 118 may be provided in the form of a barrier, cuboid, bar, and/or rod. In the mounting position shown in Fig. 7, the protrusion 118 is arranged at the highest point of the stop element 110 and/or the stopper 100.

The bearing 114 is arranged at a section at the lower end of the main body 111 and/or below the protrusion 118 in the stop position of the stop element 110.

The rollover protection 116 is arranged at an end facing away from both the protrusion 118 and the bearing 114. The rollover protection 116 may be provided with a groove that interacts with a stop of the fixed element 120 (cf. Fig. 7).

At the stop axis 112, the main body 111 may comprise a substantially circular through hole that may be mounted on the axle and/or axle stumps of the roller 12 of the conveyor. Depending on the roller axle, the through hole may comprise a differently shaped form, e.g. it may be shaped hexagonal.

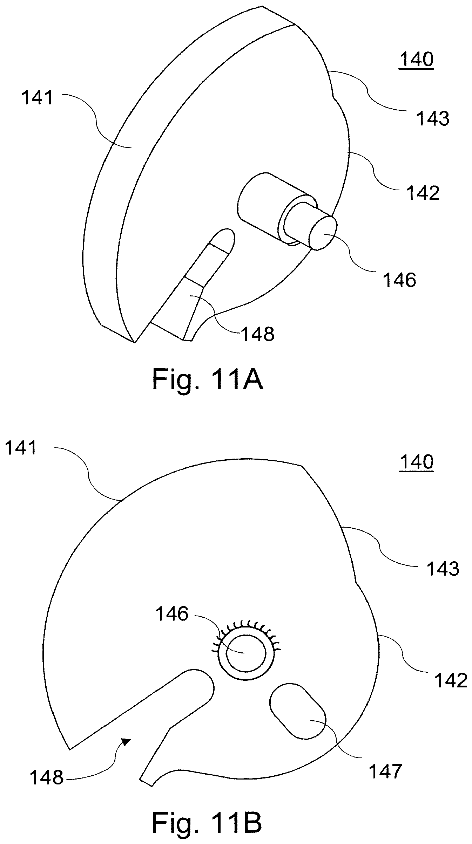

**Figs. 11A and 11B** show the cam 140 in a perspective view and from a side view, respectively. The cam 140 is roughly disk-shaped, wherein said disk comprises eccentric circumferential sections. The first perimeter section 141 is arranged at the largest distance from the cam axis 146. The second perimeter section 142 is arranged at a smaller distance from the cam axis 46. Between the first parameter section 141 and the second perimeter section 142, a third perimeter section 143 may provide a rather smooth transition between the two perimeter sections 141 and 142. The cam 140 may further comprise a through hole 147 and/or a slit 148. The though hole 147 may be designed roughly oval. The hole 147 may be configured to connect with an upper end of the connecting rod 152 (cf. Figs. 7, 8 and 9), that may be rotatably mounted to the cam 140, e.g. by a pin through the hole 147.

The slit 148 may also be configured to interact similarly with the upper end of the connecting rod 152. Alternatively, the slit 148 may be configured to interact with a static end of a fixed element like the fixed element 120 to limit the rotational movement of the cam 140 within predetermined limits.

The thickness of the cam 140 and/or of the two perimeter sections 141 and 142 is sufficient to safely support the bearing 114 of the stop element 110. The cam 140 may comprise a substantially constant thickness of between 0.5 cm to 3 cm that provide a stable support for the bearing 114.

The first perimeter section 141 ranges over a circular segment of at least 90 and/or 120°. This rather large circular segment of the first perimeter section 141 compensates for tolerances of how far the push rod 150 is pushed into its lock position. These tolerances may occur when the trolley 20 operates the push rod 150 depending on its exact arrangement and/or position.

Similarly, also the second perimeter section 142 extends over a circular segment of the cam 140 of at least 90° and/or 120°. This also compensates for tolerances.

At its cam axis 146, the cam 140 may comprise an axle stump that is mountable into the frame of the conveyor 10 and/or into the fixed element 120 (cf. Figs. 7 to 9). That axle stump of the cam 140 may be provided with a bearing to ensure a safe, easy and/or low friction rotational movement of the cam 140 about the cam axis 146.

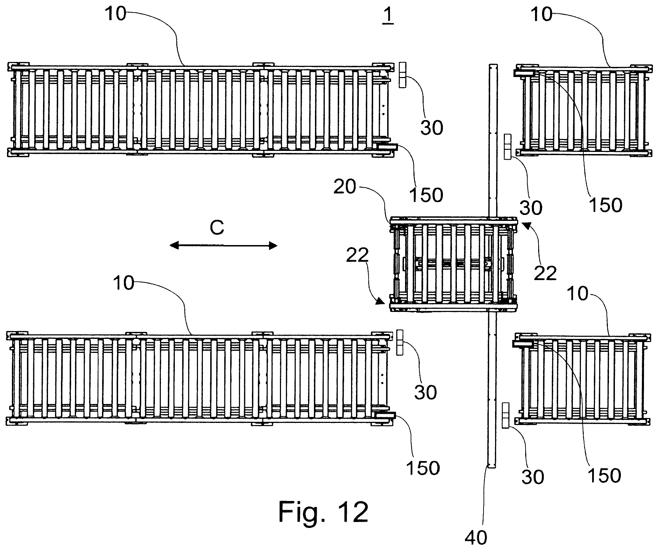

**Fig. 12** shows a top view of a transportation system 1 wherein a trolley 20 is moving between conveyors 10. In each conveyor 10, the push rod 150 may be provided at one end of the conveyor 10 in the width direction orthogonal to the conveying direction C. The push rod 150 is configured to be triggered and/or pushed by the trolley 20. When the trolley 20 is aligned with the conveyor 10, the push rod 150 is pushed to be at the unlock position. When the trolley 20 is moved away from the conveyor 10, the push rod 150 is returned into its lock position by the spring 154. The spring 154 may be provided as a biasing member.

The trolley 20 may comprise a ramp 22 configured to contact with the push rod 150 of the conveyor 10. The ramp 22 may be configured to contact with the push rod 150 of the conveyor 10 so that the push rod 150 is at the unlock position when the trolley 20 is aligned with the conveyor 10 as shown in Fig. 2. The ramp 22 may comprise slopes and/or inclined surfaces at both of its ends in the moving direction of the trolley 20 so that the ramp 22 can smoothly contact with the push rod 150, particularly the roller 156, of the conveyor 10.

The trolley 20 may also be provided with stoppers 100 at at least one of its ends. The push rod 150 of the trolley 20 may be adapted to be movable in the vertical direction. Besides that, the push rod 150 of the trolley acts similar as the horizontal push rod 150 shown in the Figs. 7 to 9. The vertical push rod 150 may also comprise a connecting rod 152 configured to transfer the linear movement of the push rod into a rotational movement of the cam 140.

Alternatively, the push rod 150 may be connected to the cam 140 directly without any connecting rod 152. The push rod 150 of the trolley 20 may comprise a roller 156 on its free end (e.g. facing downwards to the floor). The roller 156 is supported to be rotatable around an axis oriented in a horizontal direction. The roller 156 of the push rod 150 of the trolley 20 may be rotatable in the direction substantially perpendicular to the direction in which the conveyor tracks 1a, 1b convey loads, similarly to the wheel 24 (cf. Fig. 1).

The push rod 150 of the trolley 20 may be configured to be pushed by a bump 30 on a floor or the frame of the conveyor 10. The bump 30 is configured to contact with the push rod 150 of the trolley 20. The bump 30 comprises slopes and/or inclined surfaces at both ends in the movable direction of the trolley 20 so that the bump 30 may smoothly contact with the push rod 150, particularly the roller 156, of the trolley 20. The positions of the bumps 30 of one particular embodiment are shown in Fig. 12.

The push rods 150 of the trolley 20 may be provided at both ends of the trolley 20 in the conveying direction C. The push rods 150 of the trolley 20 may be provided at one end or at both ends of the trolley 20 in the width direction orthogonal to the conveying direction C.

The bumps 30 may be configured and: arranged to trigger and/or push the push rods 150 of the trolley 20. When the trolley 20 is aligned with the conveyor 10 as shown in Fig. 2, the (e.g. vertically arranged) push rod 150 of the trolley 20 is pushed upward in the vertical direction (e.g. by the bump 30) so that it is arranged in the unlock position. On the other hand, when the trolley 20 is separated from the conveyor 10 as shown in Fig. 12, the push rod 150 of the trolley 20 is returned to be arranged in its lock position, e.g. by the spring 154 and/or by gravitation.

If the trolley 20 is aligned with the conveyor 10, the stop elements 110 of the trolley 20 are in their conveying position similarly to the stop elements 110 of the conveyor 10. Thus, the load 3 on the trolley 20 is not stopped by the stop elements 110 of the trolley 20 (and the conveyor 10) but rather allowed to be conveyed off the trolley 20 and onto the conveyor 10.

When the trolley 20 is separated from the conveyor 10, the stop elements 110 of the trolley 20 are in their stop position similarly to the stop element 110 of the conveyor 10 (cf. Fig. 7). Therefore, the load 3 on the trolley 20 is stopped by the stop elements 110 of the trolley 20 and may not fall off the trolley 20.

### List of Reference Numerals

- 1:: transportation system
- 1a, 1b:: conveyor track
- 3:: load
- 10:: conveyor
- 12:: end roller
- 13:: roller
- 20:: trolley
- 22:: ramp
- 24:: wheel
- 30:: bump
- 40:: rail
- 100:: stopper
- 110:: stop element
- 111:: body
- 112:: stop axis
- 113:: opening
- 114:: bearing
- 116:: rollover protection
- 118:: protrusion
- 120:: fixed element
- 140:: cam
- 141:: first perimeter section
- 142:: second perimeter section
- 143:: perimeter transition section
- 146:: cam axis
- 147:: hole
- 148:: slit
- 150:: push rod
- 152:: connecting rod
- 154:: spring
- 156:: roller
- C: conveying direction

## Claims

1. A stopper (100) for a transportation system (1) configured to convey a load (3), comprising:
- a stop element (110) configured to contact with the load (3), wherein the stop element (110) is pivotable about a stop axis (112),
- a cam (140) configured to support the stop element (110), wherein the cam (140) is rotatable about a cam axis (146), and
- a push rod (150) connected to the cam (140);
wherein
- the stop element (110) rests on a first perimeter section (141) of the cam (140) when the push rod (150) is arranged in a lock position,
- the stop element (110) rests on a second perimeter section (142) of the cam (140) when the push rod (150) is arranged in an unlock position,
**characterized in that**,
- the first perimeter section (141) ranges over a circular segment of the cam (140) of at least 90°, and
- the second perimeter section (142) also ranges over a circular segment of the cam (140) of at least 90°.

2. The stopper (100) according to claim 1, wherein
- the stop element (110) is arranged in a stop position configured to stop the load (3) from being conveyed along the transportation system (1) when the stop element (110) rests upon the first perimeter section (141) of the cam (140) and
- the stop element (110) is arranged in a conveying position configured to allow the load (3) to be conveyed along the transportation system (1) when the stop element (110) rests upon the second perimeter section (142) of the cam (140).

3. The stopper (100) according to claim 2, wherein the stop element (110) comprises a protrusion (118) configured
- to protrude above a conveying plane on which the load (3) is conveyed along the transportation system (1) in the stop position and
- to be arranged at least 5 mm below the conveying plane in the conveying position.

4. The stopper (100) according to any of the preceding claims, wherein the first perimeter section (141) is arranged at a different distance from the cam axis (146) than the second perimeter section (142).

5. The stopper (100) according to any of the preceding claims, wherein the stop element (110) comprises a bearing (114) at a position that rest upon the cam (140).

6. The stopper (100) according to any of the preceding claims, wherein a protrusion (118) of the stop element (110) that is configured to contact with the load (3) is spaced at least 2 cm apart in a horizontal direction from the stop axis (112) and/or from the closest roller axle of the transportation system (1).

7. The stopper (100) according to any of the preceding claims, wherein the stop axis (112) coincides with a rotational axis of an end roller (12) of the transportation system (1).

8. The stopper (100) according to any of the preceding claims, wherein the stop element (110) comprises a rollover protection (116).

9. The stopper (100) according to any of the preceding claims, wherein the pushrod (150) is pushed into the lock position by a spring force.

10. The stopper (100) according to any of the preceding claims, wherein the pushrod (150) is displaceable in a substantially horizontal and/or vertical direction.

11. A conveyor (10) for conveying a load (3), comprising a stopper (100) according to any of the preceding claims.

12. A trolley (20) for conveying a load (3), comprising:
- a wheel (24) rotatable in a direction different from a conveying direction (C) of the load (3); and
- a stopper (100) according to any one of claims 1 to 10.

13. A transportation system (1), comprising
- a conveyor (10) according to claim 11; and
- a trolley (20) according to claim 12.

14. The transportation system (1) according to claim 13, wherein the trolley (20) comprises a ramp (22) configured to contact with the push rod (150) of the stopper (100) of the conveyor (10).

15. The transportation system (1) according to claims 13 or 14, comprising a bump (30) configured to contact with the push rod (150) of the stopper (100) of the trolley (20) and/or the conveyor (10).

## Patentansprüche

1. Ein Stopper (100) für ein Transportsystem (1), das zum Transport einer Last (3) konfiguriert ist, umfassend
- ein Anschlagelement (110), das so konfiguriert ist, dass es mit der Last (3) in Kontakt kommt, wobei das Anschlagelement (110) um eine Anschlagachse (112) schwenkbar ist,
- einen Nocken (140), der so konfiguriert ist, dass er das Anschlagelement (110) trägt, wobei der Nocken (140) um eine Nockenachse (146) drehbar ist, und
- eine Schubstange (150), die mit dem Nocken (140) verbunden ist;
wobei
- das Anschlagelement (110) auf einem ersten Umfangsabschnitt (141) des Nockens (140) aufliegt, wenn die Schubstange (150) in einer Verriegelungsposition angeordnet ist,
- das Anschlagelement (110) auf einem zweiten Umfangsabschnitt (142) des Nockens (140) aufliegt, wenn die Schubstange (150) in einer Entriegelungsposition angeordnet ist,
**dadurch gekennzeichnet, dass**,
der erste Umfangsabschnitt (141) sich über ein Kreissegment des Nockens (140) von mindestens 90° erstreckt, und
der zweite Umfangsabschnitt (142) sich ebenfalls über ein Kreissegment des Nockens (140) von mindestens 90° erstreckt.

2. Der Stopper (100) nach Anspruch 1, wobei
- das Anschlagelement (110) in einer Anschlagsposition angeordnet ist, die so konfiguriert ist, dass die Last (3) daran gehindert wird, entlang des Transportsystems (1) befördert zu werden, wenn das Anschlagelement (110) auf dem ersten Umfangsabschnitt (141) des Nockens (140) ruht, und
- das Anschlagelement (110) in einer Förderposition angeordnet ist, die so konfiguriert ist, dass die Last (3) entlang des Transportsystems (1) befördert werden kann, wenn das Anschlagelement (110) auf dem zweiten Umfangsabschnitt (142) des Nockens (140) ruht.

3. Der Stopper (100) nach Anspruch 2, wobei das Anschlagelement (110) einen Vorsprung (118) aufweist, der eingerichtet ist um
- in der Anschlagposition über eine Transportebene, auf der die Last (3) entlang des Transportsystems (1) transportiert wird, herauszuragen und
- in der Förderstellung mindestens 5 mm unterhalb der Förderebene angeordnet zu sein.

4. Der Stopper (100) nach einem der vorhergehenden Ansprüche, wobei der erste Umfangsabschnitt (141) in einem anderen Abstand zur Nockenachse (146) angeordnet ist als der zweite Umfangsabschnitt (142).

5. Der Stopper (100) nach einem der vorhergehenden Ansprüche, wobei das Anschlagelement (110) ein Lager (114) an einer Position umfasst, die auf dem Nocken (140) aufliegt.

6. Der Stopper (100) nach einem der vorhergehenden Ansprüche, wobei ein Vorsprung (118) des Anschlagelements (110), der zum Kontakt mit der Last (3) ausgebildet ist, in horizontaler Richtung mindestens 2 cm von der Anschlagachse (112) und/oder von der nächstgelegenen Rollenachse des Transportsystems (1) beabstandet ist.

7. Der Stopper (100) nach einem der vorhergehenden Ansprüche, wobei die Stopperachse (112) mit einer Drehachse einer Endrolle (12) des Transportsystems (1) zusammenfällt.

8. Der Stopper 00) nach einem der vorhergehenden Ansprüche, wobei das Anschlagelement (110) einen Überrollschutz (116) aufweist.

9. Der Stopper (100) nach einem der vorhergehenden Ansprüche, wobei die Schubstange (150) durch eine Federkraft in die Verriegelungsposition gedrückt wird.

10. Der Stopper (100) nach einem der vorhergehenden Ansprüche, wobei die Schubstange (150) in einer im Wesentlichen horizontalen und/oder vertikalen Richtung verschiebbar ist.

11. Förderer (10) zum Transportieren einer Last (3), umfassend einen Stopper (100) nach einem der vorhergehenden Ansprüche.

12. Ein Wagen (20) zum Transportieren einer Last, der folgendes umfasst:
- ein Rad (24), das in einer Richtung drehbar ist, die sich von der Transportrichtung (C) der Last (3) unterscheidet; und
- einen Stopper (100) nach einem der Ansprüche 1 bis 10.

13. Ein Transportsystem (1 ), umfassend
- einen Förderer (10) nach Anspruch 11; und
- einen Wagen (20) nach Anspruch 12.

14. Das Transportsystem (1) nach Anspruch 13, wobei der Wagen (20) eine Rampe (22) umfasst, die so konfiguriert ist, dass sie mit der Schubstange (150) des Stoppers (100) des Förderers (10) in Kontakt kommt.

15. Das Transportsystem (1) nach Anspruch 13 oder 14, mit einem Anschlag (30), der so gestaltet ist, dass er mit der Schubstange (150) des Stoppers (100) des Wagens (20) und/oder des Förderers (10) in Kontakt kommt.

## Revendications

1. Dispositif d'arrêt (100) pour système de transport (1) configuré pour convoyer une charge (3), comprenant
- un élément d'arrêt (110) configuré pour être en contact avec la charge (3), l'élément d'arrêt (110) étant pivotable autour d'un axe d'arrêt (112),
- une came (140) configurée pour supporter l'élément d'arrêt (110), la came (140) pouvant tourner autour d'un axe de came (146), et
- une barre de poussée (150) connectée à la came (140);
dans lequel
- l'élément d'arrêt (110) repose sur une première section périmétrique (141) de la came (140) lorsque la barre de poussée (150) est disposée dans une position de verrouillage,
- l'élément d'arrêt (110) repose sur une seconde section périmétrique (142) de la came (140) lorsque la barre de poussée (150) est disposée dans une position de déverrouillage,
**caractérisé en ce que**
la première section périmétrique (141) s'étend sur un segment circulaire de la came (140) d'au moins 90°, et
la seconde section périmétrique (142) s'étend aussi sur un segment circulaire de la came (140) d'au moins 90°.

2. Dispositif d'arrêt (100) selon la revendication 1, dans lequel
- l'élément d'arrêt (110) est disposé dans une position d'arrêt configurée pour empêcher la charge (3) d'être convoyée le long du système de transport (1) lorsque l'élément d'arrêt (110) repose sur la première section périmétrique (141) de la came et (140) and
- l'élément d'arrêt (110) est disposé dans une position de convoyage configurée pour permettre à la charge (3) d'être convoyée le long du système de transport (1) lorsque l'élément d'arrêt (110) repose sur la seconde section périmétrique (142) de la came (140).

3. Dispositif d'arrêt (100) selon la revendication 2, dans lequel l'élément d'arrêt (110) comprend une saillie (118) configurée
- pour saillir au-dessus d'un plan de convoyage sur lequel la charge (3) est convoyée le long du système de transport (1) dans la position d'arrêt
- pour être disposée au moins 5 mm en-dessous du plan de convoyage dans la position de convoyage.

4. Dispositif d'arrêt (100) selon l'une quelconque des revendications précédentes, dans lequel la première section périmétrique (141) est disposée à une distance de l'axe de came (146) différente de celle de la seconde section paramétrique (142).

5. Dispositif d'arrêt (100) selon l'une quelconque des revendications précédentes, dans lequel l'élément d'arrêt (110) comprend un palier (114) à une position qui repose sur la came (140).

6. Dispositif d'arrêt (100) selon l'une quelconque des revendications précédentes, dans lequel une saillie (118) de l'élément d'arrêt (110) qui est configurée pour être en contact avec la charge (3) est espacée d'au moins 2 cm dans un sens horizontal de l'axe d'arrêt (112) et/ou de l'axe de rouleau le plus proche du système de transport (1).

7. Dispositif d'arrêt (100) selon l'une quelconque des revendications précédentes, dans lequel l'axe d'arrêt (112) coïncide avec un axe de rotation d'un rouleau terminal (12) du système de transport (1).

8. Dispositif d'arrêt (100) selon l'une quelconque des revendications précédentes, dans lequel l'élément d'arrêt (110) comprend une protection anti-roulement (116).

9. Dispositif d'arrêt (100) selon l'une quelconque des revendications précédentes, dans lequel la barre de poussée (150) est poussée dans la position de verrouillage par une force de ressort.

10. Dispositif d'arrêt (100) selon l'une quelconque des revendications précédentes, dans lequel la barre de poussée (150) est déplaçable dans un sens substantiellement horizontal et/ou vertical.

11. Convoyeur (10) destiné à convoyer une charge (3), comprenant un dispositif d'arrêt (100) selon l'une quelconque des revendications précédentes.

12. Chariot (20) destiné au convoyage d'une charge, comprenant :
- une roue (24) pouvant tourner dans un sens différent d'un sens de convoyage (C) de la charge (3) ; et
- un dispositif d'arrêt (100) selon l'une quelconque des revendications 1 à 10.

13. Système de transport (1), comprenant
- un convoyeur (10) selon la revendication 11 ; et
- un chariot (20) selon la revendication 12.

14. Système de transport (1) selon la revendication 13, dans lequel le chariot (20) comprend une rampe (22) configurée pour être en contact avec la barre de poussée (150) du dispositif d'arrêt (100) du convoyeur (10).

15. Système de transport (1) selon les revendications 13 ou 14, comprenant une bosse (30) configurée pour être en contact avec la barre de poussée (150) du dispositif d'arrêt (100) du chariot (20) et/ou du convoyeur (10).
